# EUROPEAN PATENT SPECIFICATION

(11) **EP 2 853 156 B1**
(45) Date of publication and mention of the grant of the patent: **11.04.2018**
(21) Application number: 12877233.2
(22) Date of filing: 23.05.2012
(51) Int. Cl.: A01K 61/00

(54) **BUOYANCY AND CONNECTION SYSTEM FOR RIGID, METALLIC AND/OR HIGH-WEIGHT MESHES OR NETS**
SCHWIMM- UND VERBINDUNGSSYSTEM FÜR STARRE, METALLISCHE UND/ODER SCHWERGEWICHTIGE MASCHEN ODER NETZE
SYSTÈME DE FLOTTAISON ET DE JONCTION POUR DES MAILLES OU DES FILETS RIGIDES, MÉTALLIQUES ET/OU DE POIDS ÉLEVÉ

(43) Date of publication of application: 01.04.2015
(73) Proprietor: Ecosea Farming S.A., 5480000 Puerto Montt (CL); Sanchez Raccaro, Rodrigo, 5480000 Puerto Montt (CL)
(72) Inventor: SANCHEZ RACCARO, Rodrigo, 5480000 Puerto Montt (CL)
(74) Representative: Carvajal y Urquijo, Isabel
(86) International application number: PCT/CL2012/000025
(87) International publication number: WO 2013/173936

(56) References cited:
- WO-A1-2006/021010
- WO-A1-2009/047213
- WO-A2-2010/015852
- ES-U- 1 070 301
- KR-Y1- 200 156 742
- US-A1- 2010 018 471

## Description

### TECHNICAL FIELD

The invention relates to a floating connection system that supplies the additional buoyancy needed for the use of heavy weight and/or metallic rigid meshes commonly used in aquaculture to contain, nurture and harvest aquatic species.

### BACKGROUND

Floating cages are widely used around the World for the growing, nurturing and harvesting of aquatic species. These cages are usually support nets made of flexible materials and synthetic fibers (Nylon-PES or super fibers), and also metallic components. However, in the last 5 years, heavy weight and/or metallic rigid meshes made out of stainless steel or copper alloys, have been incorporated to the scene, being the copper alloys the ones with the best results, just as EcoSea has been developing them throughout the last years in the Chilean Salmon's aquaculture.

The need for improvements on the current growth, nurture and harvest conditions of aquatic species, have turn into the development of many new structural solutions, in which copper heavy weight rigid meshes stands out, mainly due to the fact that they not only bring deformation to a minimum and reduce the maintenance costs, but also contribute to the control of biofouling, amongst other features.

The use of heavy weight and/or metallic rigid meshes, all of which add a considerable amount of extra weight to traditional systems, brings out the need for new additional floating structures or the reengineering and/or strengthening of the existing ones, in order to ensure the floating of the cage, without compromising the integrity of the hidrobiologic species, incorporating improvements on personnel and operator's safety environment.

Document KR200156742 discloses a floating system which comprises three pipes, and a bracket and passages between the pipes, and the mesh is clearly made of synthetic fibres, that is, of low weight, and it is joined directly to the passages over the water and the inner edge.

Document WO2009/047213 discloses an anti-predator semi rigid steel wire fence system for a floating structure comprising some brackets which surround the perimeter of the perimetrical tube of a cage-raft, such brackets have a peg; some posts which are mounted on such pegs and provide firmness to the fence; some hooking elements fixed to the posts; some rods that are interwoven vertically to some meshes and are hooked to said hooking elements fixed to the posts, where said meshes have some cables interwoven horizontally which provide more resistance to the mesh and also the mesh is joined to the rods by means of some tensors which keep the mesh tense.

Document ES1070301 discloses fasteners for float tubes made of High Density Polyethylene (HDPE), with the technology of injection molding, with the function of holding the float tubes used in Marine Aquaculture, from 20 to 50 cms. in diameter to form lines parallel tubes, limiting their number or position in horizontal or vertical.

Consistent with this, it is necessary to propose a system to safely use these heavy weight and/or metallic rigid meshes, using a bracket that holds and supports the necessary additional floating to the cage, allowing also the connection between this new mesh and the primary floating system described above.

This type of solution is applicable to both conventional cages, in which the solution incorporates a floating aid to sustain the weight of this type of meshes, as well as the integrated systems which already include the necessary additional floating.

This independent additional system is located within the cage, so that it fulfills the function of self-sustain the greater weight of such mesh.

For each of the proposed alternatives, the heavy weight and/or metallic rigid meshes, is always considered under the water surface, so as to prevent air / water interface known to cause an accelerated corrosion process, thus decreasing the diameter of the wire strands, shortening and reducing it's useful life.

### DETAILED DESCRIPTION

### SYSTEM 1: INTEGRATED

The present invention generates a solution that allows the use of heavy weight and/or metallic rigid meshes in platforms or cages used in aquaculture for the growth, maintenance, nurture and harvesting of aquatic species. To accomplish this, EcoSea has developed a special support bracket, or an essential component of the platform, cage or net, that use rigid metal and/or heavy weight mesh, which provides both containment of the floating's Circular Rings on one hand, and support and floating of this type of mesh to the same floating system. This bracket allows the incorporation of additional floating to the platform and / or cage to lift heavy weight and/or metallic rigid meshes with over five tons of weight. This invention is based on the configuration of said bracket which is capable of operating with three tubes or HDPE rings or any other material with similar characteristics, and also provides the joint with the mesh using a tube (or similar material) with smaller diameter that allows a safely connection without detriment to the generality of the structure.

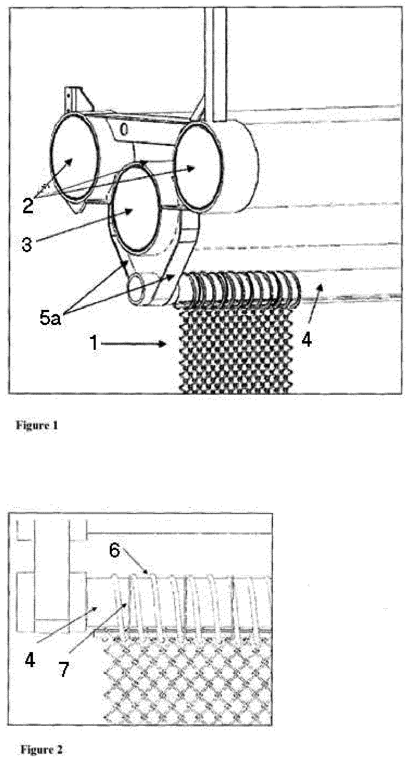

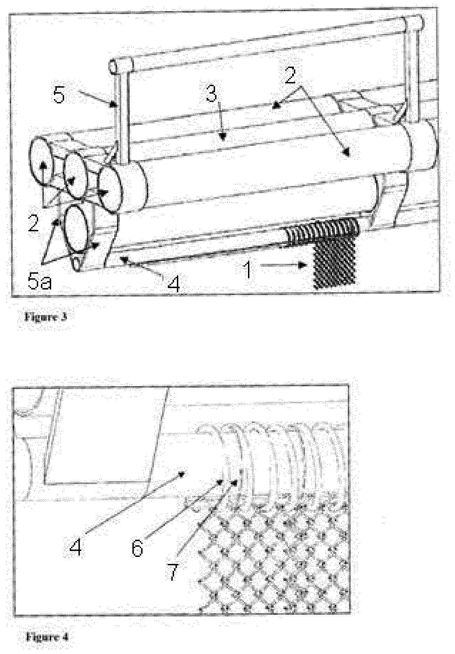

Figure No. 1 shows a sectional view of the bracket, which can be constructed of HDPE, galvanized steel, galvanized steel and coated in HDPE, or other related material that meets the proper mechanical and non-corrosion properties to avoid possible galvanic corrosion, due to the proximity of the rigid mesh (1) in the case that it is of copper alloy. The dimensions of both the pipes to be used, and the bracket in question, will depend only on the level of energy (wind, waves and / or currents) which the destination site presents on the platform or cage.

For the exemplary embodiment, there are three pipes or circular rings, in which can be observed two or more main flotation pipes (2) of equal diameter arranged on top as Main Floating, which have the particularity to operate in between waters, and another pipe, located below it, operating totally submerged as an Additional Flotation pipe, which can be of equal or different diameter as the ones arranged in the upper bracket. This additional flotation pipe (3) generates enough floating as to self-support the additional weight of the mesh (1). Moreover, the bracket in its lower section has an extension (5a) which allows passage of the bond system with the mesh, in this case represented by a HDPE pipe, or other related material that meets the above feature.

The junction or union between the mesh and the tubing illustrated in Figure N ° 2, is performed by the use of wires (7) made out of the same material as the rigid mesh (1) with an interval of 2-3 squares to the connection pipe (4) of smaller diameter and reinforced by the use of ropes (6) which intersect each mesh (1) and connection pipe (4) along the entire section of the mesh (1). Likewise, the above union can be accomplished by the use of synthetic ropes, which can perform the described function and do not have problems with galvanic corrosion nor offer wear to the mesh (1).

Figure N ° 3 illustrates another variant of bracket (5), which fulfills the same purpose or principle described, however unlike the previous one, in this case the three main floating pipes (2) have the same horizontal arrangement. In this way, both sides of the main flotation pipes (2) must have the same diameter, while the additional flotation pipe (3) may or may not have the same diameter as the previous two.

Furthermore, the lower section of the bracket (5) has an extension (5a) which allows passage of the bond system with the mesh (1), represented here by a HDPE connection pipe (4), or other related material, which complies with the above feature, integrating the floating system of platform and / or cage.

The connection between the mesh (1) and connection pipe (4), illustrated in Figure N ° 4, is performed by the use of passing wires (7) made out of the same material of the mesh (1) with an interval of 2-3 squares to the connection pipe (4) and reinforced by the use of ropes (6) which intersect each mesh (1) and connection pipe (4) along the entire section of this, providing a secure and reliable in operation. Likewise, the binding can be performed using synthetic ropes which can perform the described function and do not present problems with galvanic corrosion nor offer wear to the mesh.

### SYSTEM 2: INDEPENDENT

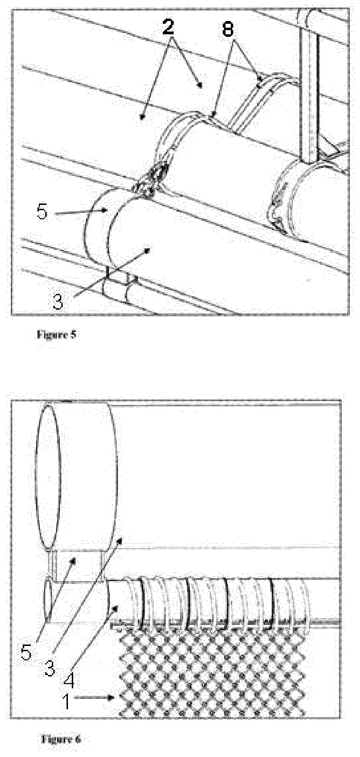

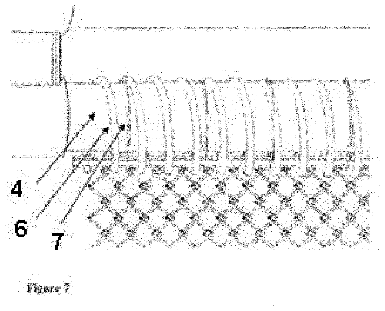

Figure N° 5 shows the use of heavy weight and/or metallic rigid meshes on existing platforms or cages, which plots the construction of an independent additional flotation pipe (3), that is incorporated into a platform and / or cage (both circular and right angle) of two or three main flotation pipes (2) which lies within these last, which is attached thereto by a synthetic ropes (8) and whose only function is self-sustaining the extra weight of the mesh through the use of a connecting bracket (5).

A connection bracket (5) can be observed in the additional flotation pipe (3) system shown in Figure No. 6, this connection bracket may be built in HDPE, galvanized steel, galvanized steel and coated in HDPE, or any other related material that meets the mechanical properties and non-corrosion, to prevent possible galvanic corrosion due to proximity to the rigid mesh, in the case is made out of copper alloy. At its upper section, an additional flotation pipe (2) passes with sufficient diameter allowing self-floating, thus supporting the weight of this kind of meshes (1). In its lower section, the bracket has an extension through which passes a connection pipe (4) or connection system, which is used for connecting the mesh with the additional flotation pipe (3) or system.

The junction between the rigid mesh and the piping, as illustrated in Figure N ° 7, is performed by the use of wires (7) made out of the same material as the rigid mesh with an interval of 2-3 squares to each smaller diameter tube (4) and reinforced by the use of ropes (6) which intersect each section of the mesh (1) and main floatation pipe (2) along the entire rigid mesh (1). The union may also be accomplished by the use of synthetic ropes (6) fulfilling the same function described above, as long as they do not represent problems with galvanic corrosion or offer wear to the mesh (1).

## Claims

1. A bracket (5) for aquaculture cage systems, for supporting a heavy weight and/or metallic rigid mesh (1) weighing over five tons, said bracket being constructed of galvanized steel and coated in HDPE, or other related material that meets proper mechanical and non- corrosion properties to avoid galvanic corrosion, used in aquaculture to contain, nurture and harvest aquatic species, wherein the bracket (5) is connectable to main flotation pipes (2) arranged on top of the bracket (5) and operating in between water, and to an additional flotation pipe (3) of the aquaculture cage operating totally submerged, the bracket in its lower section below the additional flotation pipe (3) having an extension (5a) which allows passage of a pipe or bond system made of HDPE, or other related material, whose main function is the connection of the heavy weight and/or metallic rigid mesh (1) to the bracket, wherein the position of the heavy weight and/or metallic rigid mesh (1) is is always considered beneath the surface of water, thus avoiding the air / water interface that causes an accelerated corrosion process.

2. The bracket (5) for aquaculture cage systems, according to claim N° 1, **CHARACTERIZED in that** it comprises a connection rope (8) for aquaculture cages operating in between water and it is connected to in the additional flotation pipe (3) operating in between water.

3. The bracket (5) for aquaculture cage systems according to claim N° 1, CHARACTERIZED for the use of two or three main flotation pipes (2) of the bracket (5) operating in between water, and an additional flotation pipe (3) of the aquaculture's platform and/or cage operating totally submerged, outer tubes of the main flotation pipes (2) located on top of the bracket (5) being of equal diameter, and together with the additional flotation pipe (3) providing sufficient buoyancy needed when using the heavy weight and/or metallic rigid mesh.

4. The bracket (5) for aquaculture cage systems according to claim N° 1, **CHARACTERIZED by** incorporating on its lower part, an Additional flotation pipe (3), which is capable of supporting the weight of the heavy weight and/or metallic rigid mesh (1) by itself, while submerged, this Additional flotation pipe (3) being of equal or different diameter to the main flotation pipes (2) arranged on top of the bracket.

5. The bracket (5) for aquaculture cage systems according to claim N° 1, **CHARACTERIZED in that** it comprises wires made out of the same material as the mesh (1) and connecting the heavy weight and/or metallic rigid mesh (2) and the bond system (4), wires (7) being placed with an interval of every 2 - 3 squares of mesh sections to the bond system (4), and **in that** it comprises reinforcing ropes (6) that intersect between the mesh (1) and the bond system (4) along the entire perimeter or upper edge of the mesh (1), and **in that** it comprises synthetic ropes (6) for accomplishing the union, as long as they do not represent problems with galvanic corrosion or offer wear to the mesh (1).

6. The bracket (5) for aquaculture cage systems according to claim N° 1, **CHARACTERIZED by** the passage of an additional flotation pipe (3) on its upper section, whose diameter brings sufficient buoyancy thus allowing the use of heavy weight and/or metallic rigid meshes (1).

## Patentansprüche

1. Bügel (5) für Aquakultur-Käfigsysteme zum Tragen eines schweren und/oder metallischen steifen Netzes (1), das über fünf Tonnen wiegt, wobei der Bügel aus galvanisiertem Stahl gebaut ist und in HDPE oder einem anderen diesbezüglichen Material beschichtet ist, das die angemessenen mechanischen und nicht korrosiven Eigenschaften zum Vermeiden von galvanischer Korrosion erfüllt, das in der Aquakultur zum Enthalten, Nähren und Sammeln von Wasserlebewesen verwendet wird, wobei der Bügel (5) mit Hauptschwimmrohrleitungen (2), die auf der Oberseite des Bügels (5) angeordnet sind und im Wasser betrieben werden, und mit einer zusätzlichen Schwimmrohrleitung (3) des Aquakulturkäfigs, die vollständig eingetaucht ist, verbunden werden kann, wobei der Bügel in seinem unteren Abschnitt unterhalb der zusätzlichen Schwimmrohrleitung (3) eine Erweiterung (5a) aufweist, die einen Durchgang eines Rohrleitungs- oder Verbindungssystems aus HDPE oder einem anderen diesbezüglichen Material ermöglicht, dessen Hauptfunktion die Verbindung des schweren und/oder metallischen steifen Netzes (1) mit dem Bügel ist, wobei die Position des schweren und/oder metallischen steifen Netzes (1) immerzu als unter der Wasseroberfläche betrachtet wird, wodurch die Luft-/Wasserschnittstelle vermieden wird, die einen beschleunigten Korrosionsprozess verursacht.

2. Bügel (5) für Aquakulturkäfigsysteme nach Anspruch 1, **DADURCH GEKENNZEICHNET, dass** er ein Verbindungsseil (8) für Aquakulturkäfige umfasst, die in Wasser betrieben werden und mit der zusätzlichen Schwimmrohrleitung (3) verbunden ist, die in Wasser betrieben wird.

3. Bügel (5) für Aquakulturkäfigsysteme nach Anspruch 1, **GEKENNZEICHNET DURCH** die Verwendung von zwei oder drei Hauptschwimmrohrleitungen (2) des Bügels (5), die in Wasser betrieben werden, und einer zusätzlichen Schwimmrohrleitung (3) der/des Aquakulturplattform und/oder -käfigs, die vollständig eingetaucht betrieben werden, wobei äußere Rohre der Hauptschwimmrohrleitungen (2), die auf der Oberseite des Bügels (5) angeordnet sind, einen gleichen Durchmesser aufweisen und zusammen mit der zusätzlichen Schwimmrohrleitung (3) einen ausreichenden Auftrieb bereitstellen, der benötigt wird, wenn das schwere und/oder metallische steife Netz verwendet wird.

4. Bügel (5) für Aquakulturkäfigsysteme nach Anspruch 1, **GEKENNZEICHNET durch** das Integrieren, an seinem unteren Teil, einer zusätzlichen Schwimmrohrleitung (3), die das Gewicht des schweren und/oder metallischen Netzes (1) selbst tragen kann, während dies eingetaucht ist, wobei diese zusätzliche Schwimmrohrleitung (3) von gleichem oder unterschiedlichem Durchmesser wie die Hauptschwimmrohrleitungen (2) ist, die auf der Oberseite des Bügels angeordnet sind.

5. Bügel (5) für Aquakulturkäfigsysteme nach Anspruch 1, **DADURCH GEKENNZEICHNET, DASS** er Drähte umfasst, die aus dem gleichen Material wie das Netz (1) hergestellt sind und das schwere und/oder metallische steife Netz (2) und das Verbindungssystem (4) verbinden, wobei die Drähte (7) mit einem Abstand von jeweils 2 bis 3 Netzmaschen vom Verbindungssystem (4) angeordnet sind, und dadurch, dass er Verstärkungsseile (6) umfasst, die zwischen dem Netz (1) und dem Verbindungssystem (4) entlang des gesamten Umfangs oder oberen Randes des Netzes (1) ineinander vermaschen, und dadurch, dass er synthetische Seile (6) zum Herstellen des Zusammenschlusses umfasst, solange dies kein Problem für die galvanische Korrosion darstellt oder den Verschleiß des Netzes (1) bedeutet.

6. Bügel (5) für Aquakulturkäfigsysteme nach Anspruch 1, **GEKENNZEICHNET durch** den Durchlauf einer zusätzlichen Schwimmrohrleitung (3) in seinem oberen Abschnitt, deren Durchmesser einen ausreichenden Auftrieb mit sich bringt, wodurch die Verwendung von schweren und/oder metallischen steifen Netzen (1) ermöglicht wird.

## Revendications

1. Support (5) pour systèmes de cage d'aquaculture, pour supporter une maille de poids élevé et/ou rigide métallique (1) pesant plus de cinq tonnes, ledit support étant construit en acier galvanisé et enrobé de PEHD, ou en un autre matériau similaire qui remplit les propriétés mécaniques et non-corrosives adéquates pour éviter la corrosion galvanique, utilisé en aquaculture pour contenir, cultiver et capturer les espèces aquatiques, dans lequel le support (5) est raccordable aux tuyaux de flottaison principaux (2) disposés au-dessus du support (5) et fonctionnant dans l'eau, et à un tuyau de flottaison supplémentaire (3) de la cage d'aquaculture fonctionnant totalement en immersion, le support dans sa section inférieure en dessous du tuyau de flottaison supplémentaire (3) ayant une extension (5a) qui permet le passage d'un tuyau ou d'un système de liaison en PEHD, ou en un autre matériau similaire, dont la fonction principale est le raccordement de la maille de poids élevé et/ou rigide métallique (1) au support, dans lequel la position de la maille de poids élevé et/ou rigide métallique (1) est toujours considérée en dessous de la surface de l'eau, évitant ainsi l'interface air/eau qui provoque une processus de corrosion accéléré.

2. Support (5) pour systèmes de cage d'aquaculture, selon la revendication N°1, **CARACTÉRISÉ en ce qu'**il comprend une corde de raccordement (8) pour les cages d'aquaculture fonctionnant dans l'eau et elle est raccordée au tuyau de flottaison supplémentaire (3) fonctionnant dans l'eau.

3. Support (5) pour systèmes de cage d'aquaculture selon la revendication N°1, **CARACTÉRISÉ par** l'utilisation de deux ou trois tuyaux de flottaison principaux (2) du support (5) fonctionnant dans l'eau, et un tuyau de flottaison supplémentaire (3) de la plateforme et/ou cage d'aquaculture fonctionnant totalement en immersion, des tubes externes des tuyaux de flottaison principaux (2) situés au-dessus du support (5) étant de même diamètre, et conjointement au tuyau de flottaison supplémentaire (3) fournissant suffisamment de flottabilité nécessaire lorsque l'on utilise une maille de poids élevé et/ou rigide métallique.

4. Support (5) pour systèmes de cage d'aquaculture selon la revendication N°1, **CARACTÉRISÉ en ce qu'**il incorpore sur sa partie inférieure, un tuyau de flottaison supplémentaire (3), qui est capable de supporter le poids de la maille de poids élevé et/ou rigide métallique (1) lui-même, pendant qu'il est en immersion, ce tuyau de flottaison supplémentaire (3) ayant un diamètre égal ou différent des tuyaux de flottaison principaux (2) disposés au-dessus du support.

5. Support (5) pour systèmes de cage d'aquaculture selon la revendication N°1, **CARACTÉRISÉ en ce qu'**il comprend des câbles faits du même matériau que la maille (1) et raccordant la maille de poids élevé et/ou rigide métallique (2) et les câbles (7) du système de liaison (4) étant placés tous les 2-3 carrés de sections de maille au système de liaison (4), et **en ce qu'**il comprend des cordes de renforcement (6) qui s'entrecroisent entre la maille (1) et le système de liaison (4) le long de tout le périmètre ou du bord supérieur de la maille (1), et **en ce qu'**il comprend des cordes synthétiques (6) pour réaliser l'union, à condition qu'elles ne représentent pas de problèmes pour la corrosion galvanique ou l'usure de la maille (1).

6. Support (5) pour systèmes de cage d'aquaculture selon la revendication N°1, **CARACTÉRISÉ par** le passage d'un tuyau de flottaison supplémentaire (3) sur sa section supérieure, dont le diamètre apporte suffisamment de flottabilité permettant ainsi l'utilisation de mailles de poids élevé et ou rigides métalliques (1).
